# EUROPÄISCHE PATENTANMELDUNG

(11) **EP 1 167 870 A2**
(43) Veröffentlichungstag der Anmeldung: **02.01.2002**
(21) Anmeldenummer: 00127752.4
(22) Anmeldetag: 19.12.2000
(51) Int. Cl.: F21S 8/10, F21V 8/00

(54) **Leuchte für Fahrzeuge**

(30) Priorität: 01.07.2000 DE 10032160; 01.07.2000 DE 10032159
(71) Anmelder: Hella KG Hueck & Co., 59552 Lippstadt (DE)
(72) Erfinder: Gödecker, Reiner, 59558 Lippstadt (DE); Lachmayer, Roland, Dr., 59581 Warstein (DE)

(57) **Zusammenfassung**

Leuchte (1) für Fahrzeuge, insbesondere für Kraftfahrzeuge, bestehend aus einem Leuchtengehäuse (2), dass in Abstrahlrichtung (6) von einer Abschlussscheibe (3) begrenzt wird, und mindestens einem länglichen Lichtleitelement (4), dass auf einer Vorderseite (8) eine Lichtaustrittsfläche (9,10), auf einer der Vorderseite (8) abgewandten Rückseite (11) eine Reflexionsfläche (12) und an einem ersten Ende (13) eine Lichteinkoppelfläche (14) mit einer vorgelagerten Lichtquelle (5) aufweist, wobei die Lichtaustrittsfläche (9,10) des Lichtleitelements (4) als Teil der Abschlussscheibe (3) ausgebildet ist.

## Beschreibung

Die Erfindung betrifft eine Leuchte für Fahrzeuge, insbesondere für Kraftfahrzeuge, bestehend aus einem Leuchtengehäuse, das in Abstrahlrichtung von einer Abschlussscheibe begrenzt wird, und mindestens einem länglichen Lichtleitelement, das auf einer Vorderseite eine Lichtaustrittsfläche, auf einer der Vorderseite abgewandten Rückseite eine Reflexionsfläche und an einem ersten Ende eine Lichteinkoppelfläche mit einer vorgelagerten Leuchtquelle aufweist.

Aus der DE 198 03 537 A1 ist eine Leuchte für Fahrzeuge bekannt, die längliche Lichtleitelemente aufweist. Das längliche Lichtleitelement weist eine auf seiner Vorderseite angeordnete Lichtaustrittsfläche und eine auf einer der Vorderseite gegenüberliegenden Rückseite angeordnete Reflexionsfläche und eine an einem ersten Ende angeordnete Lichteinkoppelfläche auf, über die Licht einer vorgelagerten Lichtquelle eingekoppelt und von der Reflexionsfläche in eine Hauptabstrahlrichtung etwa senkrecht zu einer Längsachse des Optikkörpers gelenkt wird. Die Lichtaustrittsfläche des Lichtleitelementes ist dabei in einem Abstand zur Abschlussscheibe des Leuchtengehäuses angeordnet.

Nachteilig bei der bekannten Leuchte ist, dass sie einerseits eine relativ hohe Tiefe aufweist und andererseits die Befestigung und Positionierung einer Mehrzahl von Lichtleitelementen auf einer Leiterplatte relativ aufwendig ist.

Aufgabe der vorliegenden Erfindung ist es daher, die bekannte Leuchte so zu verbessern, dass sie flacher und damit raumsparender gestaltet werden kann und dass sie einfacher und kostengünstiger zu montieren ist.

Diese Aufgabe wird erfindungsgemäß in Verbindung mit dem Oberbegriff des Anspruches 1 dadurch gelöst, dass die Lichtaustrittsfläche des Lichtleitelementes als Teil der Abschlussscheibe ausgebildet ist.

Dadurch, dass die Lichtaustrittsfläche des Lichtleitelementes als Teil der Abschlussscheibe ausgebildet ist, fällt der Abstand zwischen Lichtleitelement und Abschlussscheibe weg und die Leuchte lässt sich flacher gestalten. Durch die Integration des Lichtleitelementes in die Abschlussscheibe kann zudem auf die Befestigung auf einer Platine verzichtet werden, was zu einer weiteren Verringerung der Tiefe führt. Für die Leuchte werden weniger Teile benötigt, so dass die Montage einfacher und kostengünstiger gestaltet werden kann.

Gemäß einer bevorzugten Ausführungsform der Erfindung ist die Abschlussscheibe als tragendes und verbindendes Teil einer Mehrzahl von Lichtleitelementen ausgebildet.

Durch die Verbindung der Abschlussscheibe als tragendes und verbindendes Bauteil lassen sich relativ einfach flächige Lichtaustritte mit einer Mehrzahl von Lichtleitelementen realisieren. Eine Mehrzahl von Lichtleitelementen kann einzeilig oder zweizeilig hintereinander sowie gegeneinander und mehrzeilig in verschiedenen Kombinationen positioniert werden. Durch eine praktisch beliebige Anordnung der Lichtleitelemente auf der Lichtscheibeninnenseite besteht eine Designfreiheit, so dass beispielsweise Parkett oder Fischgrätmuster erzeugt werden können.

Nach einer weiteren bevorzugten Ausführungsform der Erfindung weist die Abschlussscheibe einen umlaufenden Rand auf, über den die Abschlussscheibe mit dem Leuchtengehäuse verbindbar ist. Durch den umlaufenden Rand lässt sich die Abschlussscheibe leicht und sicher gegenüber dem Leuchtengehäuse positionieren.

Nach einer weiteren bevorzugten Ausführungsform der Erfindung ist die Abschlussscheibe mit dem Gehäuse staub- und wasserdicht verschweißbar. Durch Verschweißen der Abschlussscheibe mit dem Gehäuse wird eine sichere, staub- und wasserdichte Verbindung erzielt.

Nach einer weiteren bevorzugten Ausführungsform der Erfindung ist die Lichtaustrittsfläche des Lichtleitelements als eine Zusatzoptik ausgebildet, die das von der Reflexionsfläche reflektierte Licht in eine vorgebbare Lichtverteilung überführt.

Dadurch, dass die Lichtaustrittsfläche als eine Zusatzoptik ausgebildet ist, kann eine gezielte Einstellbarkeit der Lichtverteilung erreicht werden. Durch die entsprechende Wahl der Zusatzoptik besitzt ein einzelnes Lichtleitelement die Eigenschaft, die vollständige relative Lichtstärkeverteilung der entsprechenden Leuchtenfunktion zu generieren. Eine aus mehreren Lichtleitelementen mit Zusatzoptik zusammengesetzte Kraftfahrzeugleuchte bietet daher die Möglichkeit, die Form der leuchtenden Fläche in gewissen Grenzen frei zu gestalten.

Gemäß einer weiteren bevorzugten Ausführungsform der Erfindung ist die Zusatzoptik in Form einer optischen Struktur auf der in Abstrahlrichtung liegenden Außenseite der Abdeckscheibe angeordnet. Durch die Anordnung einer optischen Struktur auf der Außenseite der Abdeckscheibe lässt sich eine gewünschte Lichtstärkeverteilung, wie sie beispielsweise für Signalfunktionen bei Kraftfahrzeugen gefordert wird, generieren.

Gemäß einer weiteren bevorzugten Ausführungsform der Erfindung sind die Lichtleitelemente auf einer einem Gehäuseinnenraum zugewandten Innenseite der Lichtscheibe durch schmale Spalte optisch voneinander entkoppelt positioniert. Dadurch lässt sich beispielsweise ein brillantes Streifendesign erzielen.

Nach einer weiteren bevorzugten Ausführungsform der Erfindung sind die Lichtleitelemente auf der dem Gehäuseinnenraum zugewandten Innenseite der Lichtscheibe mit direkter seitlicher Berührung angeordnet. Durch die Gestaltung der Lichtleitelemente lässt sich eine Blockung von optisch verbundenen Elementen erreichen, ohne dass eine Überstrahlung eines nicht illuminierten Segments durch ein illuminiertes Nachbarsegment auftritt. Die mit Licht beaufschlagten Bereiche sind klar zu erkennen, so dass auch Matrixleuchten realisierbar sind.

Gemäß einer weiteren bevorzugten Ausführungsform der Erfindung sind den Lichtleitelementen Lichtquellen mit unterschiedlichen Farbspektren vorgelagert. Durch die Verwendung von Lichtquellen mit unterschiedlichen Farbspektren lassen sich Kombinationsleuchten, beispielsweise wie Brems- und Blinklicht oder PO-/Blinklicht realisieren. Weiterhin sind aus dem Bereich Luftfahrt sogenannte Area-Call-Panels bekannt, deren Funktion mit dem hier beschriebenen Prinzip auf einfachste Weise realisierbar ist.
Nach einer weiteren bevorzugten Ausführungsform der Erfindung weisen die Lichtleitelemente eine angespritzte Haltegeometrie auf, mit der die Lichtquellen direkt hinter der Abschlussscheibe anordenbar sind.

Durch die angespritzte Haltegeometrie können die Leuchtdioden direkt hinter die Abschlussscheibe gerastet und gegebenenfalls durch ein Bond-Verfahren elektrisch kontaktiert werden.

Für den Gesamtaufbau der Leuchte ergibt sich eine sehr einfache und flache Struktur. Durch die Fertigung einer einteiligen Abschlussscheibe ergibt sich zudem die Reduzierung der Teileanzahl. Durch eine entsprechende Beschaltung der Lichtquellen verschiedener Lichtleitelemente lassen sich Lauflichtleisten oder flächige Effekte auf einfache Weise realisieren.

Die ultraflache Form des Leuchtenaufbaues ermöglicht eine Anbringung innerhalb einer nicht dargestellten Karosseriemulde durch Kleben, Verrasten oder Verschrauben. Somit werden großflächige Karosseriedurchbrüche vermieden. Kleine Bohrungen für Kabeldurchführung und gegebenenfalls Raster sind vollkommen ausreichend. Gegen Wasser- bzw. Staubeintrag können konventionelle Maßnahmen zur Abdichtung eingesetzt werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

Es zeigen:
- Figur 1:: Eine Seitenansicht im Schnitt einer Leuchte für Kraftfahrzeuge in einzeiliger Ausführung,
- Figur 2:: eine Seitenansicht im Schnitt einer Leuchte für Kraftfahrzeuge in zweizeiliger Ausführung,
- Figur 3:: eine räumliche Darstellung eines Lichtleitelementes mit Zusatzoptik,
- Figur 4:: eine räumliche Darstellung einer aus einer Mehrzahl von Lichtleitelementen bestehenden einreihigen Abschlussscheibe,
- Figur 5:: eine räumliche Darstellung einer Abschlussscheibe mit zweireihig angeordneten Lichtleitelementen,
- Figur 6:: eine Seitenansicht einer direkten Lichteinkopplung in ein Lichtleitelement,
- Figur 7:: eine Seitenansicht einer Lichteinkopplung über eine direkt angeformte Fresnellinse,
- Figur 8:: eine Seitenansicht einer Lichteinkopplung mittels einer hochgradig geöffneten Fresnellinse.

Eine Leuchte 1 für Fahrzeuge besteht im Wesentlichen aus einem Leuchtengehäuse 2, einer Abschlussscheibe 3, einem Lichtleitelement 4 und einer Lichtquelle 5.

Das Leuchtengehäuse 2 weist in Abstrahlrichtung 6 einen Aufnahmerand 7 auf, mit dem die Abschlussscheibe 3 verbindbar ist. Die Abschlussscheibe 3 weist auf ihrer Vorderseite 8 eine Lichtaustrittsfläche 9 auf. Die Abschlussscheibe 3 bildet mit dem Lichtleitelement 4 eine Einheit. Eine Lichtaustrittsfläche 10 des Lichtleitelementes 4 ist somit integraler Bestandteil der Lichtaustrittsfläche 9 der Abschlussscheibe 3. Das Lichtleitelement 4 weist auf seiner der Lichtaustrittsfläche 10 abgewandten Rückseite 11 eine Reflexionsfläche 12 und an seinem ersten Ende 13 eine Lichteinkoppelfläche 14 auf. Die Lichtaustrittsfläche 10 des Lichtleitelementes 4 und die Reflexionsfläche 12 werden von einer ersten Seitenfläche 15 und einer zweiten Seitenfläche 16 seitlich begrenzt und miteinander verbunden.

Der Lichtaustrittsfläche 10 des Lichtleitelementes 4 ist eine Lichtquelle 17, die beispielsweise als Leuchtdiode ausgebildet ist, vorgelagert.

Soweit die Lichteinkoppelfläche 14 etwa parallel zur Lichtaustrittsfläche 10 des Lichtleitelementes 4 angeordnet ist, ist der Lichteinkoppelfläche 14 eine erste Umlenkfläche 18 vorgelagert. Die erste Umlenkfläche 18 und Teile der Abschlussscheibe 3 sind mit einer Verspiegelung 19, bzw. Bedampfung bzw. Metallisierung bzw. Lackierung versehen. Die Abschlussscheibe 3 weist einen umlaufenden Rand 20 auf, dessen Stirnfläche über eine Schweißnaht 21 mit dem Aufnahmerand 7 des Leuchtengehäuses 2 verschweißt ist. An seiner Rückseite 22 weist das Leuchtengehäuse 2 eine Kabel- bzw. Steckerdurchführung 23 auf.

Über die Lichteinkoppelfläche 14 eingekoppeltes Licht der Lichtquelle 17 wird an der ersten Umlenkfläche 18 etwa parallel zur Lichtaustrittsfläche 10 in Richtung einer Verjüngung des Lichtleitelementes 4 ausgerichtet. Diese erste Umlenkfläche ist in ihrem Auftreten gleich der Anzahl der verwendeten Lichtquellen 17 bzw. Leuchtdioden und ist mit einer Verspiegelung 19 zu versehen. Die Reflexionsfläche 12 ist mit prismatischen Strukturen bzw. einer Mikrooptik belegt, die das auftreffende Licht von der ersten Umlenkfläche 18 kommend in eine Lichtaustrittsrichtung senkrecht zur Lichtaustrittsfläche etwa in Richtung der Abstrahlrichtung 6 ablenkt. Die Reflexionsfläche 12 kann dabei unbedampft bleiben. Grundsätzlich ist aber auch hier eine Bedampfung möglich.

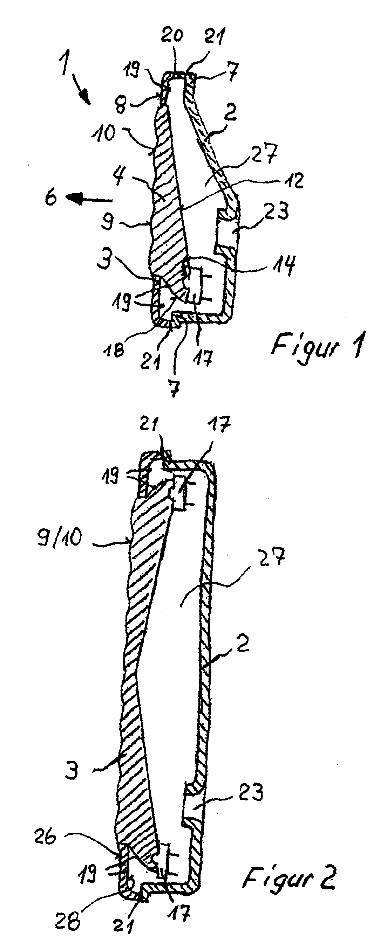

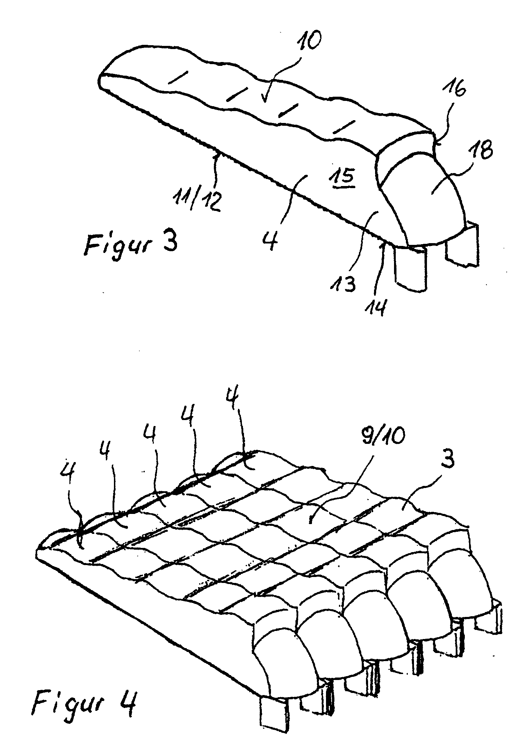

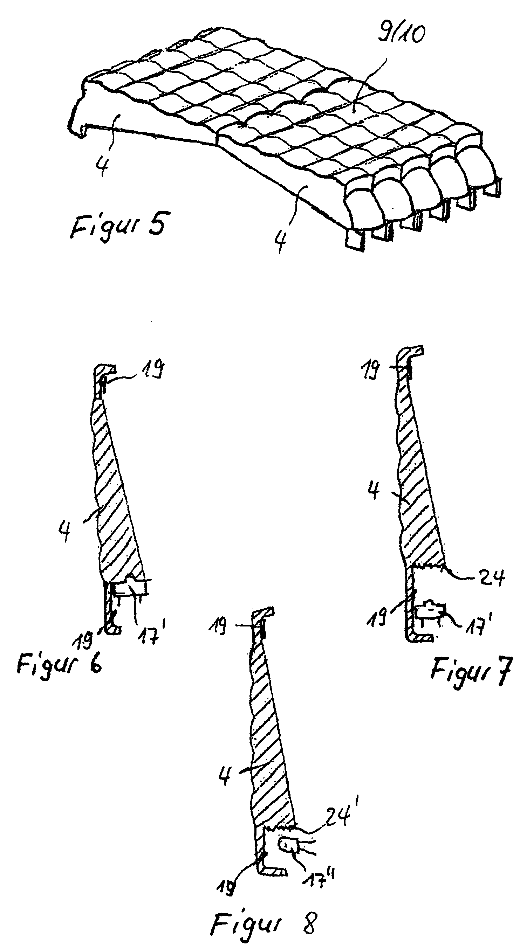

Zur Generierung einer gewünschten Lichtstärkeverteilung, wie sie für Signalfunktionen an Kraftfahrzeugen gefordert wird, weist die Lichtaustrittsfläche 10 des Lichtleitelementes 4 eine Zusatzoptik bzw. optische Strukturen auf. Die Lichtleitelemente 4 können, wie in den Figuren 1 und 4 dargestellt, einzeilig bzw. einreihig oder, wie in den Figuren 2 und 5 dargestellt, zweizeilig bzw. zweireihig sowie auch mehrzeilig bzw. mehrreihig auf der Abschlussscheibe 3 angeordnet sein.

Soweit die als Leuchtdiode ausgebildete Lichtquelle 17' gegenüber der Lichtaustrittsfläche 10 um etwa 90 ⁰ verkippt wird, kann auf die erste Umlenkfläche 18 verzichtet werden. Die Lichtquelle 17' kann über eine entsprechend ausgeformte Lichteinkoppelfläche 14 direkt einkoppeln oder aber in einem Abstand zur Lichteinkoppelfläche 14 angeordnet werden. Soweit die Lichtquelle 17" in einem Abstand zur Lichteinkoppelfläche 14 angeordnet werden soll, erfolgt eine Einkopplung der Lichtstrahlen zweckmäßigerweise über eine als Fresnellinse 24 ausgebildete Lichteinkoppelfläche 14. Hierbei ist insbesondere auch eine Einkopplung über eine hochgradig geöffnete Fresnellinse 24' möglich, die sich für eine Kombination mit einer breitstreuenden LED- oder Miniaturglühlampe 25 eignet.

Die Lichtleitelemente 4 sind auf einer einem Gehäuseinnenraum 27 zugewandten Innenseite 28 der Abschlussscheibe 3 mit direkter seitlicher Berührung zwischen zwei benachbarten Seitenflächen 8, 9 angeordnet. Es ist aber auch möglich, die benachbarten Seitenflächen 8, 9 von einander benachbarten Lichtleitelementen 4 durch schmale nicht dargestellte Spalte optisch voneinander zu entkoppeln.

## Patentansprüche

1. Leuchte für Fahrzeuge, insbesondere für Kraftfahrzeuge, bestehend aus einem Leuchtengehäuse, dass in Abstrahlrichtung von einer Abschlussscheibe begrenzt wird, und mindestens einem länglichen Lichtleitelement, dass auf einer Vorderseite eine Lichtaustrittsfläche, auf einer der Vorderseite abgewandten Rückseite eine Reflexionsfläche und an einem ersten Ende eine Lichteinkoppelfläche mit einer vorgelagerten Lichtquelle aufweist, **dadurch gekennzeichnet, dass** die Lichtaustrittsfläche (9) des Lichtleitelements (4) als Teil der Abschlussscheibe (3) ausgebildet ist.

2. Leuchte nach Anspruch 1, **dadurch gekennzeichnet**, die Abschlussscheibe (3) als tragendes und verbindendes Bauteil einer Mehrzahl von Lichtleitelementen (4) ausgebildet ist.

3. Leuchte nach Anspruch 1 oder 2, **dadurch gekennzeichnet, dass** die Abschlussscheibe (3) einen umlaufenden Rand (20) aufweist, über den die Abschlussscheibe(3) mit einem Aufnahmerand (7) des Leuchtengehäuses (2) verbindbar ist.

4. Leuchte nach Anspruch 3, **dadurch gekennzeichnet, dass** die Abschlussscheibe (3) mit dem Leuchtengehäuse (2) staub- und wasserdicht verschweißbar ist.

5. Leuchte nach einem der Ansprüche 1 bis 4, **dadurch gekennzeichnet, dass** die Lichtaustrittsfläche (10) des Lichtleitelements (4) als eine Zusatzoptik ausgebildet ist, die das von der Reflexionsfläche (12) reflektierte Licht der Lichtquelle (17) in eine vorgebbare Lichtverteilung überführt.

6. Leuchte nach Anspruch 5, **dadurch gekennzeichnet, dass** die Zusatzoptik in Form einer optischen Struktur auf der in Abstrahlrichtung liegenden Außenseite (26) der Abschlussscheibe (3) angeordnet ist.

7. Leuchte nach einem der Ansprüche 2 bis 6, **dadurch gekennzeichnet, dass** die Lichtleitelemente (4) auf einer einem Gehäuseinnenraum (27) zugewandten Innenseite (28) der Abschlussscheibe (3) durch schmale Spalte optisch voneinander entkoppelt positioniert sind.

8. Leuchte nach einem der Ansprüche 2 bis 6, **dadurch gekennzeichnet, dass** die Lichtleitelemente (4) auf einer einem Gehäuseinnenraum (27) zugewandten Innenseite (28) der Abschlussscheibe (3) mit direkter seitlicher Berührung angeordnet sind.

9. Leuchte nach einem der Ansprüche 1 bis 8, **dadurch gekennzeichnet, dass** den Lichtleitelementen (4) Lichtquellen (17, 17', 17") mit unterschiedlichen Farbspektren vorgelagert sind.

10. Leuchte nach einem der Ansprüche 1 bis 9, **dadurch gekennzeichnet, dass** die Lichtleitelemente (4) eine angespritzte Haltegeometrie aufweisen, mit der die Lichtquellen (17, 17') direkt hinter der Abschlussscheibe (3) anordnenbar sind.
